# EUROPÄISCHE PATENTSCHRIFT

(11) **EP 4 271 595 B1**
(45) Veröffentlichungstag und Bekanntmachung des Hinweises auf die Patenterteilung: **15.10.2025**
(21) Anmeldenummer: 21843702.8
(22) Anmeldetag: 21.12.2021
(51) Int. Cl.: B60S 1/38, B60S 1/52, B60S 1/40

(54) **SYSTEM, UMFASSEND EIN WISCHBLATT UND EINEN WISCHARM**
SYSTEM COMPRISING A WIPER BLADE AND A WIPER ARM
SYSTÈME COMPRENANT UNE LAME D'ESSUYAGE ET UN BRAS D'ESSUIE-GLACE

(30) Priorität: 31.12.2020 DE 102020135168; 23.06.2021 DE 102021206470
(43) Veröffentlichungstag der Anmeldung: 08.11.2023
(73) Patentinhaber: Robert Bosch GmbH, 70442 Stuttgart (DE)
(72) Erfinder: TERENTIC, Andrija, 11000 Belgrad (RS); DEPONDT, Helmut, 3370 Boutersem (BE); RAPP, Harald, 77815 Buehl (DE); CAMPSTEYN, Matthew, 3730 Hoeselt (BE)
(86) Internationale Anmeldenummer: PCT/EP2021/086986
(87) Internationale Veröffentlichungsnummer: WO 2022/144234

(56) Entgegenhaltungen:
- WO-A1-2020/193234
- DE-A1- 102010 052 309
- DE-A1- 102019 203 686
- DE-A1- 102019 207 610

## Beschreibung

### Stand der Technik

Die Erfindung betrifft ein System umfassend ein Wischblatt und einen Wischarm nach der Gattung des unabhängigen Anspruchs 1.

Ein Wischblatt wird mit einem Wischarm über einen Wischblattadapter verbunden, um die Montage des Wischblattes am Fahrzeug und das Wechseln zu ermöglichen. Der Wischblattadapter dient dazu, die seitlichen Führungskräfte von dem Wischarm bei der Wischbewegung auf das Wischblatt zu übertragen. Zusätzlich ermöglicht ein Wischblattadapter häufig eine Drehbewegung, damit sich das Wischblatt der Neigung und Krümmung der Scheibe während der Wischbewegung über die Wölbung der Scheibe anpassen kann. Dabei sind zweiteilige Ausführungen bekannt, bei denen der Wischblattadapter ein Drehgelenk umfasst, aber auch Ausführungen, bei denen die Verbindung mit dem Wischarm an einer Achse erfolgt, die eine Drehung ermöglicht und auf die Aufnahmeelemente des Wischarms lösbar aufgesetzt werden können. Bei der letzteren Ausführungsformen wird ein an dem Wischarm angebrachter Drehzapfen als Achse seitlich in eine Aufnahmeöffnung des Wischblattadapters eingeschoben.

Im Stand der Technik sind weiterhin Wischblätter bekannt, die Düsen zur Ausbringung eines Reinigungsfluids auf eine Scheibe aufweisen und bei denen durch den Wischblattadapter oder an dem Wischblattadapter angeordnet Fluidzuleitungen zum Wischarm geführt werden und zwischen dem Wischarm sowie dem Wischblattadapter lösbar verbunden werden können.

Ebenso ist es im Stand der Technik bekannt, elektrische Verbindungsleitungen zu dem Wischblatt vorzusehen, beispielsweise für eine Heizung als Schutz gegen ein Einfrieren des Reinigungsfluids. Zu diesem Zweck sind Ausführungsformen bekannt, bei denen an dem Wischblattadapter eine Steckerverbindung vorgesehen ist.

Aus der US 2014 331437 A1 ist eine Anordnung für ein Scheibenwischersystem bekannt mit einem Wischblattadapter eines Wischblatts, der eine Drehbewegung zwischen einem Wischarm und dem Wischblatt ermöglicht, wobei der Wischblattadapter dafür eingerichtet ist, um eine hydraulische Verbindung und eine elektrische Verbindung des Wischblatts mit einer Anschlussstelle des Wischarms zu ermöglichen.

Weiterer Stand der Technik ist mit der DE 10 2019 203686 A1, der DE 10 2010 052309 A1 und der DE 10 2019 207610 A1 bekannt geworden.

### OFFENBARUNG DER ERFINDUNG

Das System umfassend Wischblatt und einen Wischerarm mit den Merkmalen des Hauptanspruchs 1 hat den Vorteil, dass eine Trennung der Anschlussverbindungen für ein Reinigungsfluid auf der einen Seite und für Strom auf der anderen Seite erfolgt. Dadurch kann beispielsweise eine flachere Bauweise ermöglicht werden, da über die relativ schmale Breite des Wischblatt und somit eines Wischblattadapters die Versorgungsanschlüsse für Strom und Reinigungsfluid oftmals nur übereinander angeordnet werden können. Durch die Trennung kann dies an verschiedenen Stellen und somit mit geringerer Bauhöhe erfolgen. Auch ist grundsätzlich ein Abstand zwischen Verbindungsstellen des Reinigungsfluids bzw. Wassers und einer elektrischen Verbindungsstelle vorteilhaft. Aus der einen kann Flüssigkeit austreten und bei der elektrischen Verbindung besteht immer die Gefahr, dass eine vollständige Dichtheit gegen Feuchtigkeit und Wasser nicht vorhanden ist. Es ergibt sich überdies eine vorteilhaft leichte Montage durch den Kunden, da nach Verbinden des Wischarms und Wischblatts sowie gegebenenfalls Verbinden der Anschlussverbindungen für das Reinigungsfluid beim Verbringen des Wischblatts mit dem Wischarm in die Arbeitsposition die schleifenden Kontaktflächen sich automatisch kontaktieren.

Durch die in den Unteransprüchen aufgeführten Maßnahmen ergeben sich weiterhin vorteilhafte Weiterbildungen und Verbesserungen der in dem Hauptanspruch angegebenen Merkmale.

Vorteilhaft sind die Anschlussverbindungen für das Reinigungsfluid an einem Unterteil des Wischblattadapters angeordnet.

Es kann eine Fluidleitung des Wischarms mit den Anschlussverbindungen verbindbar und elastisch ausgeführt sein, insbesondere eine Schlauchleitung sein.

In einer Ausführung sind die Anschlussverbindungen nach oben in Richtung auf den Wischarm orientiert.

Nach der Erfindung ist das Wischblatt ein Flachbalkenwischblatt mit einem eine Vorspannkraft in Richtung einer Scheibe ausübenden Tragelement, einer Wischleiste und einem Abdeckelement, das das Tragelement auf der Oberseite überdeckt, wobei das Abdeckelement einen Spoiler aufweisen kann.

In einer vorteilhaften Ausgestaltung ist der Wischblattadapter mit dem Tragelement verbunden und getrennt davon der Stromversorgungsadapter mit dem Tragelement verbunden.

Nach der Erfindung ist zwischen Wischblattadapter und Stromversorgungsadapter ein Teil des Abdeckelements angeordnet.

### Beschreibung der Zeichnungen

Ein Ausführungsbeispiel ist in den Zeichnungen dargestellt und in der nachfolgenden Beschreibung näher erläutert. Es zeigen:
Fig. 1 ein Wischblatt mit einem montierten Wischarm und
Fig. 2 eine Sprengbilddarstellung der Elemente der Fig. 1.

### Beschreibung des Ausführungsbeispiels

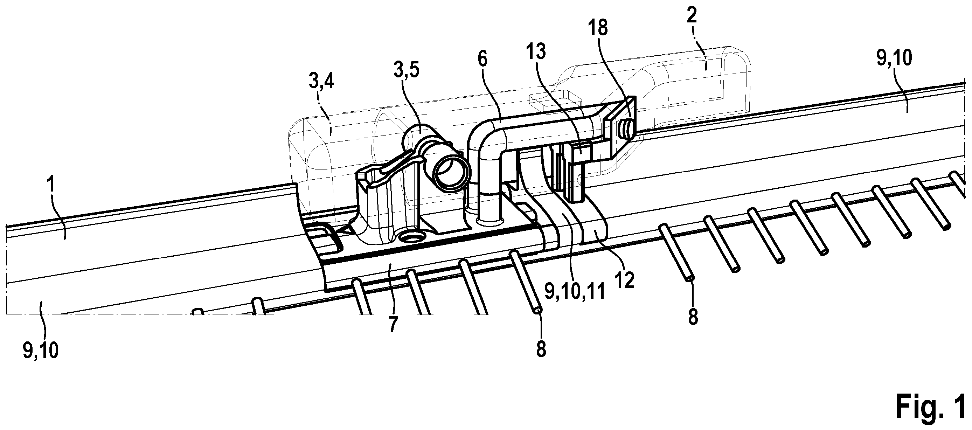

Die Fig. 1 zeigt in einem Ausschnitt ein Wischblatt 1 mit einem montierten Wischarm 2. Ein Wischblattadapter 3, bestehend aus einem Oberteil 4 und einem Unterteil 5, das mit Tragelementen des Wischblatts 1 verbunden ist, dient zur Befestigung des Wischarms 2. Über Fluidleitungen 6 wird über den Wischarm 2 ein Reinigungsfluid zugeführt, das durch den Wischblattadapter 3 auf eine Fluidleitung 7 in dem Wischblatt 1 verteilt wird, die Düsenöffnungen zum Versprühen von Reinigungsfluid 8 aufweist.

Das Wischblatt 1 weist weiterhin ein Abdeckelement 9 in Form eines Spoilers 10 auf. Durch einen Teil 11 des Abdeckelements 9 getrennt und beabstandet von dem Wischblattadapter 3 ist an dem Wischblatt 1 ein Stromversorgungsadapter 12 angeordnet. Der Stromversorgungsadapter 12 weist Kontaktflächen 13 auf, die mit Wischarmkontaktflächen 18 einen Schleifkontakt bilden.

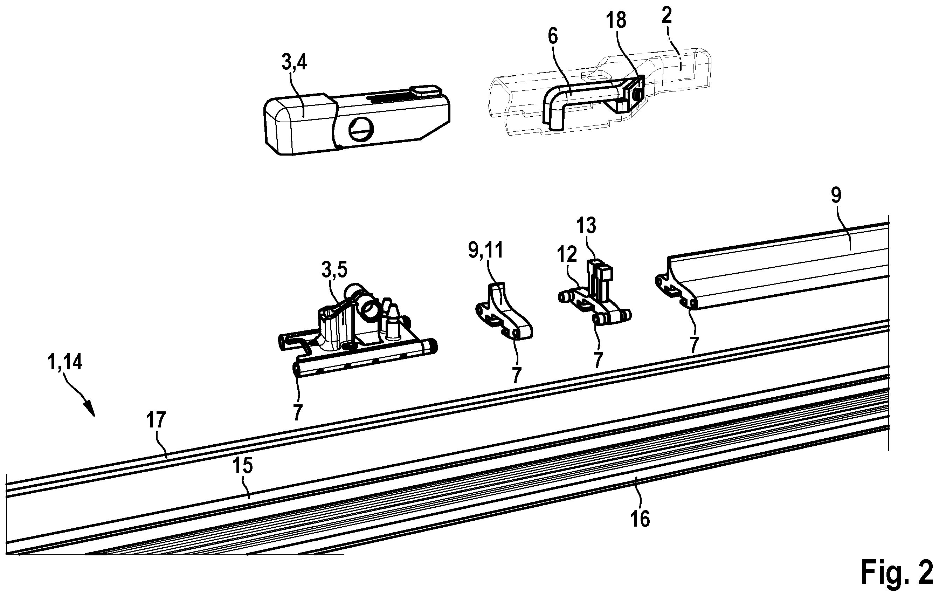

Die Fig. 2 zeigt eine Sprengbilddarstellung der Elemente der Fig. 1. Bei dem Wischblatt 1 handelt es sich um ein Flachbalkenwischblatt 14 mit einem Tragelement 15, das auf eine Wischleiste 16 eine in Richtung einer hier nicht dargestellten Scheibe gerichtete Vorspannkraft so ausübt, dass bei einer Wischbewegung die Wischleiste 16 immer an der Scheibe bei der Bewegung über deren Wölbung anliegt. Ein elektrisches Heizelement 17 verhindert ein Einfrieren des Wassers eines Reinigungsfluids bei Minustemperaturen. Auf das Tragelement 15 ist das Abdeckelement 9 gesetzt. Zwischen dem Wischblattadapter 3, bestehend aus Oberteil 4 und Unterteil 5, und dem Stromversorgungsadapter 12 mit den Kontaktflächen 13 ist ein Teil 11 des Abdeckelements 9 gesetzt und trennt diese. Durch das Abdeckelement 9, das Unterteil 5 sowie den Stromversorgungsadapter 12 läuft die Fluidleitung 7, durch deren Düsenöffnungen das Reinigungsfluid 8 austreten kann. Der Wischarm 2 weist Wischarmkontaktflächen 18 auf.

## Patentansprüche

1. System umfassend ein Wischblatt und einen Wischarm, die durch einen an dem Wischblatt (1) angeordneten Wischblattadapter (3) miteinander lösbar verbunden werden können, wobei eine Versorgungsleitung für ein Reinigungsfluid (8) über Anschlussverbindungen an dem Wischblattadapter (3) mit dem Wischarm (2) verbunden werden kann und eine Stromversorgungsverbindung lösbar zwischen Wischblatt (1) und Wischarm (2) angeordnet ist, sowie der Wischblattadapter (3) eine Drehbewegung zwischen Wischblatt (1) und Wischarm (2) ermöglicht,
**wobei** an dem Wischblatt (1) getrennt und mit Abstand zu den Wischblattadapter (3) ein Stromversorgungsadapter (12) angeordnet ist, der Kontaktflächen (13) für einen Berührungskontakt oder schleifenden Kontakt mit Wischerarmkontaktflächen (18) aufweist, wobei die Kontaktflächen (13) so orientiert sind, dass sie auf den Wischarmkontaktflächen (18) bei einer Drehbewegung zwischen Wischblatt (1) und Wischarm (2) gleiten und wobei das Wischblatt (1) ein Flachbalkenwischblatt (14) mit einem eine Vorspannkraft in Richtung einer Scheibe ausübenden Tragelement (15), einer Wischleiste (16) und einem Abdeckelement (9) ist, wobei das Abdeckelement das Tragelement (15) auf der Oberseite überdeckt, wobei das Abdeckelement (9) einen Spoiler (10) aufweisen kann **dadurch gekennzeichnet,**
**dass** zwischen Wischblattadapter (3) und Stromversorgungsadapter (12) ein Teil (11) des Abdeckelements (9) angeordnet ist.

2. System nach Anspruch 1,
**dadurch gekennzeichnet,**
**dass** die Anschlussverbindungen (23) für das Reinigungsfluid an einem Unterteil des Wischblattadapters (3) angeordnet sind.

3. System nach Anspruch 2,
**dadurch gekennzeichnet,**
**dass** eine Fluidleitung (6) des Wischarms (2) mit den Anschlussverbindungen verbindbar und elastisch ausgeführt ist, insbesondere eine Schlauchleitung ist.

4. System nach Anspruch 2 oder 3,
**dadurch gekennzeichnet,**
**dass** die Anschlussverbindungen nach oben in Richtung auf den Wischarm (2) orientiert sind.

6. System nach Anspruch 1,
**dadurch gekennzeichnet,**
**dass** der Wischblattadapter (3) mit dem Tragelement (15) verbunden ist und getrennt davon, der Stromversorgungsadapter (12) mit dem Tragelement (15) verbunden ist.

## Claims

1. System comprising a wiper blade and a wiper arm which can be releasably connected to each other by a wiper blade adapter (3) arranged on the wiper blade (1), wherein a supply line for a cleaning fluid (8) can be connected to the wiper arm (2) via coupling connections on the wiper blade adapter (3), and a power supply connection is releasably arranged between the wiper blade (1) and the wiper arm (2), and the wiper blade adapter (3) allows a rotational movement between the wiper blade (1) and the wiper arm (2), wherein a power supply adapter (12) is arranged separately on the wiper blade (1) and at a distance from the wiper blade adapter (3), the power supply adapter having contact surfaces (13) for touching contact or grinding contact with wiper arm contact surfaces (18), wherein the contact surfaces (13) are oriented in such a way that they slide on the wiper arm contact surfaces (18) during a rotational movement between the wiper blade (1) and the wiper arm (2), and wherein the wiper blade (1) is a flat-bar wiper blade (14) having a supporting element (15) exerting a preloading force in the direction of a window, a wiper strip (16) and a cover element (9), wherein the cover element covers the supporting element (15) on the upper side, wherein the cover element (9) can have a spoiler (10), **characterized**
**in that** a part (11) of the cover element (9) is arranged between the wiper blade adapter (3) and the power supply adapter (12).

2. System according to Claim 1,
**characterized**
**in that** the coupling connections (23) for the cleaning fluid are arranged on a lower part of the wiper blade adapter (3).

3. System according to Claim 2,
**characterized**
**in that** a fluid line (6) of the wiper arm (2) is connectable to the coupling connections and is elastic, in particular is a hose line.

4. System according to Claim 2 or 3,
**characterized**
**in that** the coupling connections are oriented upwards towards the wiper arm (2).

6. System according to Claim 1,
**characterized**
**in that** the wiper blade adapter (3) is connected to the supporting element (15) and, separately therefrom, the power supply adapter (12) is connected to the supporting element (15).

## Revendications

1. Système comprenant une lame d'essuie-glace et un bras d'essuie-glace qui peuvent être reliés entre eux de manière amovible par un adaptateur de lame d'essuie-glace (3) agencé sur la lame d'essuie-glace (1), une conduite d'alimentation pour un fluide de nettoyage (8) pouvant être reliée au bras d'essuie-glace (2) par l'intermédiaire de liaisons de raccordement sur l'adaptateur de lame d'essuie-glace (3) et une liaison d'alimentation électrique étant agencée de manière amovible entre la lame d'essuie-glace (1) et le bras d'essuie-glace (2), et l'adaptateur de lame d'essuie-glace (3) permettant un mouvement de rotation entre la lame d'essuie-glace (1) et le bras d'essuie-glace (2), un adaptateur d'alimentation électrique (12) étant agencé sur la lame d'essuie-glace (1), séparément et à distance de l'adaptateur de lame d'essuie-glace (3), lequel présente des surfaces de contact (13) pour un contact par pression ou un contact par frottement avec des surfaces de contact de bras d'essuie-glace (18), les surfaces de contact (13) étant orientées de manière à glisser sur les surfaces de contact de bras d'essuie-glace (18) lors d'un mouvement de rotation entre la lame d'essuie-glace (1) et le bras d'essuie-glace (2), et la lame d'essuie-glace (1) étant une lame d'essuie-glace à barre plate (14) avec un élément porteur (15) exerçant une force de précontrainte en direction d'une vitre, une baguette d'essuie-glace (16) et un élément de recouvrement (9), l'élément de recouvrement recouvrant l'élément porteur (15) sur le côté supérieur, l'élément de recouvrement (9) pouvant présenter un déflecteur (10), **caractérisé**
**en ce qu'**une partie (11) de l'élément de recouvrement (9) est agencée entre l'adaptateur de lame d'essuyage (3) et l'adaptateur d'alimentation électrique (12).

2. Système selon la revendication 1,
**caractérisé**
**en ce que** les liaisons de raccordement (23) pour le fluide de nettoyage sont agencées sur une partie inférieure de l'adaptateur de lame d'essuie-glace (3).

3. Système selon la revendication 2,
**caractérisé**
**en ce qu'**une conduite de fluide (6) du bras d'essuie-glace (2) peut être reliée aux liaisons de raccordement et est conçue sous forme élastique, notamment est une conduite flexible.

4. Système selon la revendication 2 ou 3,
**caractérisé**
**en ce que** les liaisons de raccordement sont orientées vers le haut en direction du bras d'essuie-glace (2).

6. Système selon la revendication 1,
**caractérisé**
**en ce que** l'adaptateur de lame d'essuie-glace (3) est relié à l'élément porteur (15) et séparé de celui-ci, l'adaptateur d'alimentation électrique (12) est relié à l'élément porteur (15).
